# EUROPEAN PATENT APPLICATION

(11) **EP 4 552 921 A1**
(43) Date of publication of application: **14.05.2025**
(21) Application number: 24198748.6
(22) Date of filing: 05.09.2024
(51) Int. Cl.: B60N 2/75

(54) **SEAT ARMREST FOLDING AND LOCKING MECHANISM, SEAT AND VEHICLE**

(30) Priority: 10.11.2023 CN 202311513362
(71) Applicant: Hubei Aviation Precision Machinery Technology Co., Ltd., High-Tech Zone Xiangfan Hubei 441003 (CN)
(72) Inventor: LI, Min, Xiangyang, 441003 (CN); CHEN, Lipeng, Xiangyang, 441003 (CN); HUANG, Xing, Xiangyang, 441003 (CN); LI, Shuangqiang, Xiangyang, 441003 (CN)
(74) Representative: Witte, Weller & Partner Patentanwälte mbB

(57) **Abstract**

A seat armrest folding and locking mechanism, a seat and a vehicle are provided. The seat armrest folding and locking mechanism includes a first limiting device, a second limiting device and a guide device. The first limiting device includes a first limiting face and a first movement face. The second limiting device includes a second limiting face being able to face the first limiting face and the first movement face. One of the first limiting device and the second limiting device is connected to a seat body, and the other is connected to a seat armrest. The guide device guides the second limiting device to be close to or away from the first limiting device. In a case that the second limiting face faces the first limiting face, the guide device guides the second limiting device to get close to the first limiting device, and a positioning fit structure forms between the first limiting face and the second limiting face, such that the first limiting device and the second limiting device are locked with respect to each other. In a case that the second limiting face faces the first movement face, the guide device guides the second limiting device to get away from the first limiting device, and a relatively movable structure forms by the first movement face and the second limiting face, such that the first limiting device and the second limiting device are movable with respect to each other.

## Description

### FIELD

The present application relates to the technical field of automotive equipment, and in particular to a seat armrest folding and locking mechanism, a seat and a vehicle.

### BACKGROUND

With the development of the automotive industry, automobile seats are provided with various configurations, and foldable seat armrests are more widely used in back seats of automobiles, to improve sitting comfort of passengers.

At present, the seat armrest generally employs a folding lock for folding and locking. The main structure of the folding lock is of an open type, and is only used to prevent the seat armrest from getting away from the seat body. Due to problems such as poor versatility, there is still a gap between the seat armrest and the seat body, during bumpy ride of the vehicle, the seat armrest is apt to shake and may hit the seat body, leading to problems such as noises.

Therefore, a problem to be solved by those skilled in the art is to prevent the seat armrest from shaking.

### SUMMARY

In view of this, a seat armrest folding and locking mechanism is provided according to the present application, so as to prevent the seat armrest from shaking. A seat having the above seat armrest folding and locking mechanism and a vehicle having the seat are also provided according to the present application.

To achieve the above object, the following technical solutions are provided according to the present application.

A seat armrest folding and locking mechanism includes a first limiting device, a second limiting device and a guide device, where
the first limiting device has a first limiting face and a first movement face;
the second limiting device has a second limiting face, where the second limiting face is configured to face the first limiting face in one case and face the first movement face in another case; and
the guide device is configured to guide the second limiting device to get close to or away from the first limiting device; where
one of the first limiting device and the second limiting device is connected to a seat body, and the other one of the first limiting device and the second limiting device is connected to a seat armrest;
in the one case that the second limiting face faces the first limiting face, the guide device is configured to guide the second limiting device to get close to the first limiting device, to form a positioning fit structure by the first limiting face and the second limiting face, to make the first limiting device and the second limiting device be locked with respect to each other; and
in the another case that the second limiting face faces the first movement face, the guide device is configured to guide the second limiting device to get away from the first limiting device, to form a relatively movable structure by the first movement face and the second limiting face, to make the first limiting device and the second limiting device be movable with respect to each other.

In an embodiment, the first limiting device includes an annular structure, where
the first limiting face and the first movement face are located on an inner wall of the annular structure, and are provided along a circumferential direction of the annular structure; and
the second limiting device is located at an inner side of the annular structure, and the second limiting face faces the inner wall of the annular structure.

In an embodiment, the first limiting device further includes a guide plate located inside the annular structure, and the guide plate is provided with a first guide structure; and
the second limiting device is provided with a second guide structure in sliding fit with the first guide structure.

In an embodiment, the first guide structure is a groove, and two ends of the groove are each provided with a limiting face; and
the second guide structure is a boss, and the limiting face is configured to be in contact with the second guide structure to limit the second guide structure.

In an embodiment, multiple second limiting devices are provided along the circumferential direction of the annular structure.

In an embodiment, in the one case that the second limiting face faces the first limiting face, the guide device is configured to drive the second limiting device to get close to the first limiting device, to make the first limiting face and the second limiting face be fitted with each other in a protrusion-recess manner; and
in the another case that the second limiting face faces the first movement face, the guide device is configured to drive the second limiting device to get away from the first limiting device, to make the second limiting face be in sliding fit with the first movement face is in sliding fit with the second limiting face.

In an embodiment, the first limiting face and the second limiting face are both provided with engagement teeth for mutual engagement, and the first movement face is a plain face.

In an embodiment, the guide device includes a cam component, a rotation shaft and an elastic restoring assembly, where
an outer surface of the cam component has a cam pushing face, a guide pushing face and an avoidance structure which are able to be in contact with the second guide structure of the second limiting device, where
   in a case that the second guide structure moves along a direction in which the first limiting face and the first movement face are arranged, the second guide structure is able to push the cam pushing face to rotate the cam component;
   the guide pushing face is able to push the second guide structure to be close to the first limiting device; and
   the avoidance structure, when being in contact with the second guide structure, is able to make the second guide structure be away from the first limiting device;
the rotation shaft is coaxially connected to the cam component; and
the elastic restoring assembly is connected to the rotation shaft, and is configured for restoring the cam component and the first limiting device.

In an embodiment, the elastic restoring assembly includes a slide groove plate and a restoring spring, where
in a case that the first limiting face and the second limiting face are fitted with each other, the slide groove plate is fixed with respect to the first limiting device;
the slide groove plate is provided with a first slide structure, and the second limiting device is in sliding fit with the first slide structure and is movable to be close to or away from the first limiting device; and
one end of the restoring spring is connected to the rotation shaft or the cam component, and the other end of the restoring spring is fixed with respect to the slide groove plate.

In an embodiment, the guide device further includes an unlocking component, where
the unlocking component has an unlocking face facing the outer surface of the cam component, and the second limiting device is located between the unlocking face and the outer surface of the cam component; and
the unlocking face has an unlocking pushing face being able to push the second guide structure to move towards the avoidance structure.

A seat is further provided according to the present application, including a seat body, a seat armrest, and the seat armrest folding and locking mechanism according to any one of the above solutions.

In an embodiment, in the above seat, the seat armrest and the seat body are rotationally connected through a connecting shaft, where
one end of the connecting shaft is provided with the seat armrest folding and locking mechanism; or
both ends of the connecting shaft are each provided with the seat armrest folding and locking mechanism.

A vehicle is further provided according to the present application, including the seat according to the above solutions.

It can be seen from the above technical solutions that, in the seat armrest folding and locking mechanism provided according to the present application, in a case that the seat armrest is folded and collapsed with respect to the seat body, the seat armrest is driven by an external force or a driving apparatus to rotate with respect to the seat body, such that the first limiting device and the second limiting device move with respect to each other, and the second limiting face of the second limiting device is switched between facing the first limiting face and facing the first movement face of the first limiting device. In the case that the second limiting face faces the first limiting face, the guide device guides the second limiting device to get close to the first limiting device, and a positioning fit structure is formed between the first limiting face and the second limiting face, such that the first limiting device and the second limiting device are locked with respect to each other. That is, the seat armrest and the seat body can be directly positioned with respect to each other, which effectively prevents the seat armrest from shaking, and further prevents problems such as noises due to shaking of the seat armrest.

The seat and the vehicle provided according to the present application have the same technical effects as the above seat armrest folding and locking mechanism, which will not be described in detail herein.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is an exploded schematic view showing the structure of a seat armrest folding and locking mechanism according to an embodiment of the present application;
FIG. 2 is a schematic view showing the structure of the seat armrest folding and locking mechanism according to the embodiment of the present application in a first state;
FIG. 3 is a schematic view showing the structure of the seat armrest folding and locking mechanism according to the embodiment of the present application in a second state;
FIG. 4 is a schematic view showing the structure of a second limiting device according to an embodiment of the present application;
FIG. 5 is a schematic view showing the structure of a first limiting device according to the embodiment of the present application;
FIG. 6 is a first schematic structural view showing cooperation between the first limiting device and the second limiting device according to the embodiment of the present application;
FIG. 7 is a schematic structural view showing cooperation between an unlocking component and the second limiting devices according to the embodiment of the present application;
FIG. 8 is a second schematic structural view showing cooperation between a first limiting device and the second limiting devices according to the embodiment of the present application;
FIG. 9 is a schematic view showing the structure of an upper second limiting device according to the embodiment of the present application;
FIG. 10 is a schematic view showing the structure of a lower second limiting device according to the embodiment of the present application;
FIG. 11 is a first schematic structural view showing cooperation between a rotation shaft and a cam component according to an embodiment of the present application;
FIG. 12 is a second schematic structural view showing cooperation between the rotation shaft and the cam component according to the embodiment of the present application;
FIG. 13 is first a schematic structural view showing cooperation between a second limiting devices, a first limiting device and a cam component according to an embodiment of the present application;
FIG. 14 is a second schematic structural view showing cooperation between the second limiting devices, the first limiting device and the cam component according to the embodiment of the present application;
FIG. 15 is a schematic structural view showing cooperation between a restoring spring, a slide groove plate and a rotation shaft according to an embodiment of the present application;
FIG. 16 is a schematic structural view showing cooperation between a cam component, an unlocking component and a rotation shaft according to an embodiment of the present application;
FIG. 17 is a schematic structural view showing cooperation between second limiting devices and the unlocking component according to the embodiment of the present application;
FIG. 18 is a schematic view showing the structure of a first limiting device according to an embodiment of the present application;
FIG. 19 is a schematic structural view showing cooperation between the first limiting device and a sleeve according to the embodiment of the present application;
FIG. 20 is a sectional schematic view showing cooperation between the first limiting device and the sleeve according to the embodiment of the present application;
FIG. 21 is an enlarged view of a portion A in FIG. 20;
FIG. 22 is a schematic view showing the structure of seat armrest folding and locking mechanisms and a connecting shaft according to an embodiment of the present application being assembled; and
FIG. 23 is a schematic view showing the structure of a seat armrest according to an embodiment of the present application.

### Reference numerals:

- 1: restoring spring, 11 inner end of spiral spring,
- 12: outer end of spiral spring, 2 slide groove plate,
- 21: positioning protrusion, 22 spring-hanging boss,
- 3: second limiting device, 301 second limiting face,
- 302: second guide structure, 31 upper second limiting device,
- 311: upper second limiting face, 312 upper second guide structure,
- 32: lower second limiting device, 321 lower second limiting face,
- 322: lower second guide structure, 4 rotation shaft,
- 41: positioning opening, 5 cam component,
- 50: limiting guide face, 51 cam pushing face,
- 52: guide pushing face, 53 avoidance structure,
- 54: clamping claw groove, 6 unlocking component,
- 61: clamping claw, 62 unlocking face.
- 7: first limiting device, 701 first limiting face,
- 702: first movement face, 703 first guide structure,
- 704: first positioning protrusion, 705 first limiting outer ring,
- 8: sleeve, 801 sleeve inner wall,
- 802: gap,
- 100: seat armrest folding and locking mechanism,
- 200: connecting shaft.

### DETAILED DESCRIPTION OF THE EMBODIMENTS

A seat armrest folding and locking mechanism is provided according to the present application, so as to prevent a seat armrest from shaking. A seat and a vehicle both having the above seat armrest folding and locking mechanism are also provided according to the present application.

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments according to the present application without any creative work belong to the scope of protection of the present application.

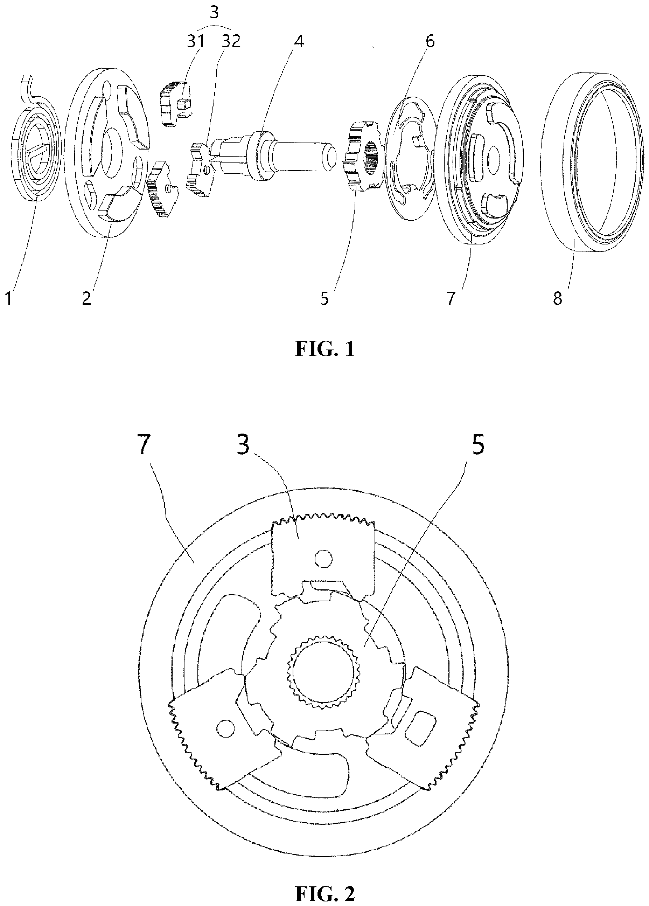

As shown in FIGS. 1, 2 and 3, a seat armrest folding and locking mechanism is provided according to embodiments of the present application, including a first limiting device 7, a second limiting device 3 and a guide device.

The first limiting device 7 includes a first limiting face 701 and a first movement face 702. The second limiting device 3 includes a second limiting face 301 which is able to face the first limiting face 701 in one case and face the first movement face 702 in another case. One of the first limiting device 7 and the second limiting device 3 is connected to a seat body, and the other one of the first limiting device 7 and the second limiting device 3 is connected to a seat armrest. The guide device can guide the second limiting device 3 to get close to or away from the first limiting device 7.

In a case that the second limiting face 301 faces the first limiting face 701, the guide device guides the second limiting device 3 to get close to the first limiting device 7, to form a positioning fit structure between the first limiting face 701 and the second limiting face, such that the first limiting device 7 and the second limiting device 3 are locked with respect to each other.

In a case that the second limiting face 301 faces the first movement face 702, the guide device guides the second limiting device 3 to get away from the first limiting device 7, to form a relatively movable structure by the first movement face 702 and the second limiting face 301, such that the first limiting device 7 and the second limiting device 3 are movable with respect to each other.

In the seat armrest folding and locking mechanism provided according to the embodiments of the present application, when the seat armrest is folded and collapsed with respect to the seat body, the seat armrest is driven by an external force or a driving apparatus to rotate with respect to the seat body, such that there is relative movement between the first limiting device 7 and the second limiting device 3, to make the second limiting face 301 of the second limiting device 3 be switched between facing the first limiting face 701 and facing the first movement face 702 of the first limiting device 7. In the case that the second limiting face 301 faces the first limiting face 701, the guide device guides the second limiting device 3 to get close to the first limiting device 7, and a positioning fit structure is formed between the first limiting face 701 and the second limiting face 301, such that the first limiting face 701 and the second limiting face 301 are locked with respect to each other. Therefore, the first limiting device 7 and the second limiting device 3 are locked with respect to each other. That is, the seat armrest and the seat body can be directly positioned with respect to each other, which effectively prevents the seat armrest from shaking, and further prevents problems such as noises due to shaking of the seat armrest.

Moreover, when the seat armrest is unfolded with respect to the seat body, the seat armrest is driven by the external force or the driving apparatus to rotate with respect to the seat body, such that there is relative movement between the first limiting device 7 and the second limiting device 3, to make the second limiting face 301 be switched to face to the first movement face 702. At this time, the guide device guides the second limiting device 3 to get away from the first limiting device 7, and a relatively movable structure is formed by the first movement face 702 and the second limiting face 301, such that the first limiting device 7 and the second limiting device 3 are movable with respect to each other, and the relative positioning between the seat armrest and the seat body is released, therefore the seat armrest can be unfolded to another position under the action of gravity.

Further, the first limiting device 7 includes an annular structure. The first limiting face 701 and the first movement face 702 are located at an inner wall of the annular structure, and are provided along a circumferential direction of the annular structure. The second limiting device 3 is located at an inner side of the annular structure, and the second limiting face 301 faces the inner wall of the annular structure. A center axis of the first limiting device 7 coincides with an axis of a rotation shaft 4, around which the seat armrest rotates with respect to the seat body. With the above arrangements, the structure is more compact.

Alternatively, the first limiting device 7 may be of a block structure, and the first limiting device 7 and the second limiting device 3 are located at positions on the seat armrest and the seat body other than the position where the rotation shaft 4 is located. The first limiting device 7 and the second limiting device 3 are locked and unlocked with respect to each other, such that the seat armrest and the seat body are locked and unlocked with respect to each other as well, which will not be described in detail herein.

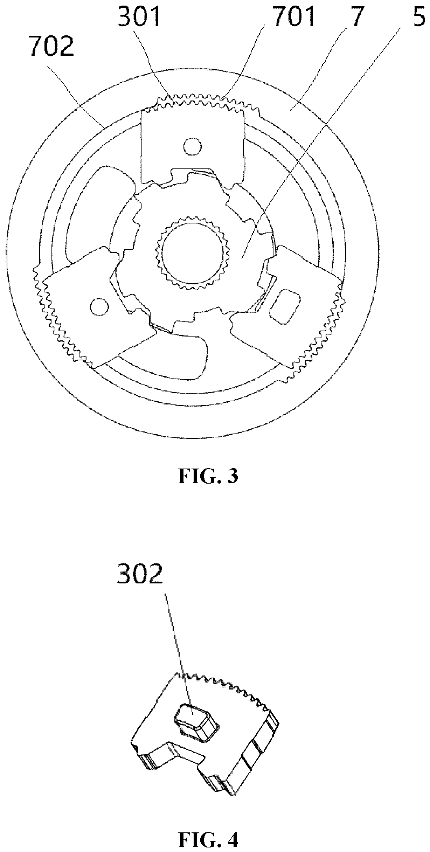

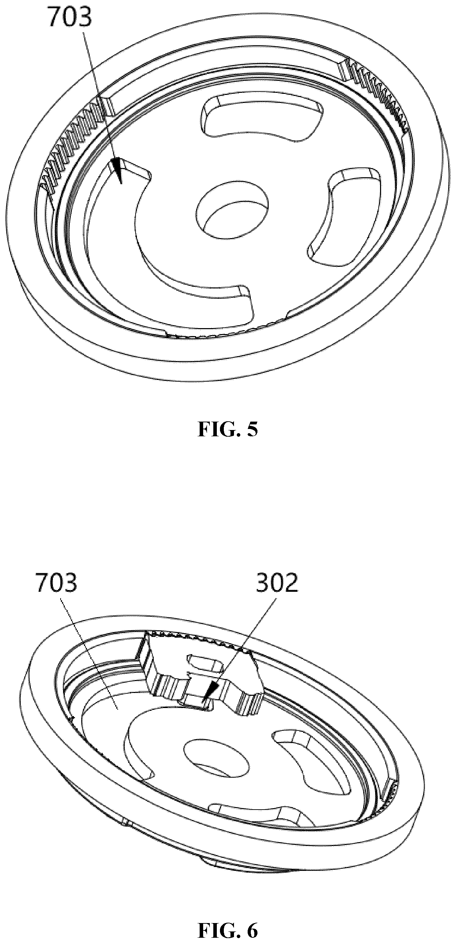

As shown in FIGS. 4, 5 and 6, further, the first limiting device 7 includes a guide plate located in the annular structure, and a first guide structure 703 is provided on the guide plate. The second limiting device 3 is provided with a second guide structure 302 in sliding fit with the first guide structure 703.

Preferably, the first guide structure 703 is an arc groove, and a center of the arc groove coincides with a center of the annular structure. The second guide structure 302 is a protrusion, and the second guide structure 302 can move along an extension direction of the arc groove of the first guide structure 703, i.e., the circumferential direction of the annular structure, to realize switching between a state where the second limiting face 301 faces the first limiting face 701 and a state where the second limiting face 301 faces to the first movement face 702. A width of the arc groove, i.e., the dimension of the arc groove in a radial direction of the annular structure, is larger than a width of the second guide structure 302, such that the second guide structure 302 can move along a width direction of the arc groove, to make the second limiting device 3 get close to or away from the first limiting device 7.

Alternatively, the first guide structure 703 may be a protrusion, and the second guide structure 302 may be a groove.

Alternatively, the first guide structure 703 may be an inclined groove or an inclined block, and the second guide structure 302 may be a structure that fitted with the first guide structure 703 in a protrusion-recess manner to guide the first guide structure 703.

To improve positioning performance, the first guide structure 703 is a groove, and two ends of the groove are each provided with a limiting face. The second guide structure 302 is a boss, and the second guide structure 302 is able to contact the limiting face and be limited by the limiting face. It may be appreciated that, in a state where the second guide structure 302 contacts the limiting face and is limited by the limiting face, the second limiting face 301 faces the first limiting face 701, and the guide device guides the second limiting device 3 to get close to the first limiting device 7, such that and the first limiting face 701 and the second limiting face 301 form the positioning fit structure.

Alternatively, a limiting component or a limiting structure may be separately provided to prevent, in the state where the second limiting face 301 faces the first limiting face 701, the second limiting device 3 from further moving in a direction along which the first limiting face 701 and the first movement face 702 are arranged.

To improve fitting performance, multiple second limiting devices 3 are provided along the circumferential direction of the annular structure.

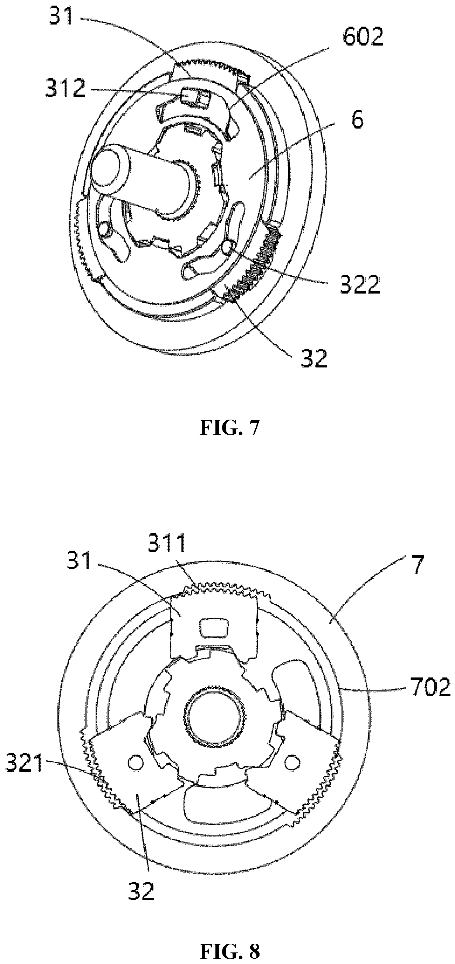

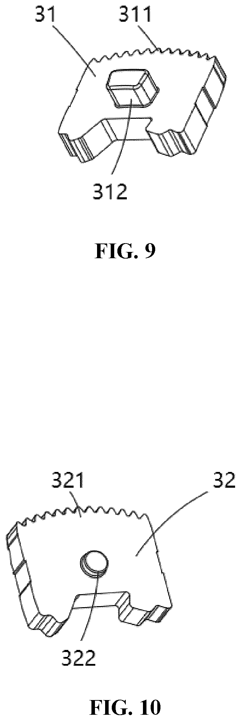

As shown in FIGS. 7, 8, 9 and 10, in the present embodiment, three second limiting devices 3 are provided, namely one upper second limiting device 31 and two lower second limiting devices 32.

In the present embodiment, a second limiting face of the upper second limiting device 31 is called an upper second limiting face 311, and the upper second limiting face 311 faces upwards. A second limiting face of each of the two lower second limiting devices 32 is called a lower second limiting face 321, and the lower second limiting face 321 faces downwards.

A second guide structure of the upper second limiting device 31 is called an upper second guide structure 312, to ensure the stability of the upper second limiting device 31, a section of the upper second guide structure 312 is fan-shaped. A second guide structure of the lower second limiting device 32 is called a lower second guide structure 322, and a section of the lower second guide structure 322 is circular.

The upper second limiting device 31 and the lower second limiting device 32 may differ in lengths of the second guide structures of the upper second limiting device 31 and the lower second limiting device 32. For example, a length of the upper second guide structure 312 is larger than a length of the lower second guide structure 322.

The upper second limiting device 31 and the lower second limiting device 32 may also differ in specific arrangement positions. For example, in the case that the second limiting face 301 faces the first limiting face 701, the upper second limiting device 31 is above a center line of the annular structure, and the lower second limiting device 32 is below the center line of the annular structure. That is, the lower second limiting device 32 can move close to the first limiting device 7 under the action of gravity, while the upper second limiting device 31 needs to be pushed upwards by an additional apparatus.

In an embodiment, when the section of the lower second guide structure 322 and the section of the upper second guide structure 312 are both circular, a diameter of the section of the lower second guide structure 322 is equal to a diameter of the section of the upper second guide structure 312.

Certainly, the upper second guide structure 312 and the lower second guide structure 322 may be other structures, which are not specifically limited herein.

Two side walls of the upper second limiting device 31 and two side walls of the lower second limiting device 32 are each provided with a groove. Specifically, the two side walls of the upper second limiting device 31 are opposite side walls, and the two side walls of the lower second limiting device 32 are also opposite side walls.

The groove is provided for improving impact resistance. Specifically, hardnesses of the upper second limiting device 31 and the lower second limiting device 32 (sliders) are higher than a hardness of a slide groove plate 2. In a case that a slider collides with the slide groove plate 2, a slide groove of the slide groove plate 2 is deformed (elastic deformation) and stuck in the groove of the slider to prevent the slider from going back and failing.

As shown in FIGS. 2 and 3, in the case that the second limiting face 301 faces the first limiting face 701, the guide device drives the second limiting device 3 to move close to the first limiting device 7, to make the first limiting face 701 and the second limiting face 301 be fitted with each other in a protrusion-recess manner; and
in the case that the second limiting face 301 faces the first movement face 702, the guide device drives the second limiting device 3 to move away from the first limiting device 7 and the first movement face 702 is in sliding fit with the second limiting face 301.

That is, in both cases that the second limiting face 301 faces the first limiting face 701 and the second limiting face 301 faces the first movement face 702, the first limiting device 7 is always in contact with the second limiting device 3, which avoids noises due to shaking of the first limiting device 7 and the second limiting device 3.

Preferably, the first limiting face 701 and the second limiting face 301 are both provided with engagement teeth for mutual engagement, and the first movement face 702 is a plain face. Alternatively, the first limiting face 701 and the second limiting face 301 may be fitted with each other in a protrusion-recess manner. For example, the first limiting face 701 has a recessed structure, and the second limiting face 301 has a protrusion face fitted with the recessed structure.

Alternatively, the first movement face 702 may be a face being provided with a guide groove or a guide protrusion, where the guide groove or the guide protrusion extends along the circumferential direction of the annular structure of the first limiting device 7, and the second limiting face 301 is able to be fitted with the guide groove or the guide protrusion to move along the circumferential direction of the annular structure of the first limiting device 7.

As shown in FIGS. 1, 3, 11 and 12, in the seat armrest folding and locking mechanism according to the embodiments of the present application, the guide device includes a cam component 5, a rotation shaft 4 and an elastic restoring assembly.

An outer surface of the cam component 5 ha a cam pushing face 51, a guide pushing face 52 and an avoidance structure 53 which are able to be in contact with the second guide structure 302. In a case that the second guide structure 302 moves in the direction along which the first limiting face 701 and the first movement face 702 are arranged, the second guide structure 302 can push the cam pushing face 51 to rotate the cam component 5. Herein, the direction along which the first limiting face 701 and the first movement face 702 are arranged refers to the circumferential direction. The guide pushing face 52 can push the second guide structure 302 to be close to the first limiting device 7. The avoidance structure 53, when being in contact with the second guide structure 302, can make the second guide structure 302 be away from the first limiting device 7. The rotation shaft 4 is coaxially connected to the cam component 5. The elastic restoring assembly is connected to the rotation shaft 4, and is configured for restoring the cam component 5 and the first limiting device 7.

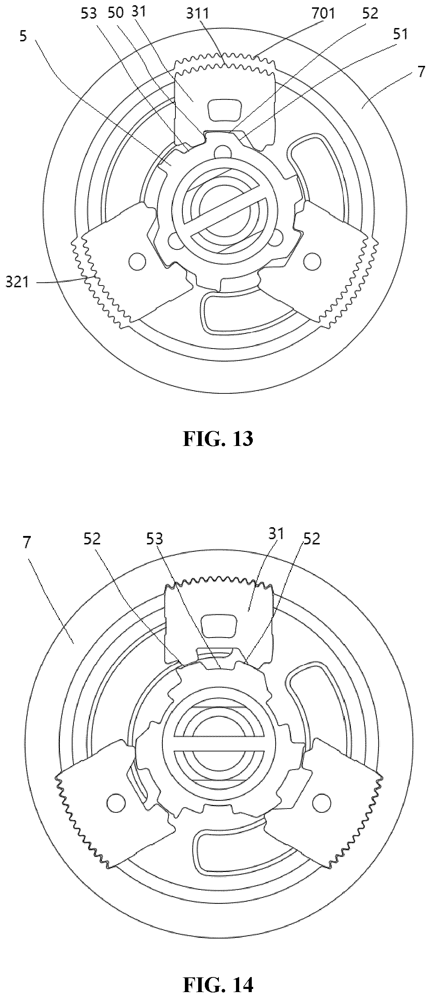

As shown in FIGS. 13 and 14, cooperation between the upper second limiting device 31 and the cam component 5 is taken as an example for the following illustration.

The cam pushing face 51 can push the upper second limiting device 31 to move along the circumferential direction of the first limiting device 7. In a case that the upper second limiting device 31 faces the first limiting face 701, the upper second limiting device 31 is limited in the circumferential direction of the first limiting device 7. Under restoration effect of the elastic restoring assembly, the cam component 5 is restored to rotate in a clockwise direction, and a bottom of the upper second limiting device 31 moves out of the avoidance structure 53, making the guide pushing face 52 be in contact the upper second limiting device 31, to push the upper second limiting device 31 upwards, such that the upper second limiting face 311 is fitted with the first limiting face 701 to form a locked structure.

A limiting guide face 50 is further provided between the avoidance structure 53 and the guide pushing face 52. According to the moving direction of the upper second limiting device 31, functions of the limiting guide face 50 and the cam pushing face 51 may be exchanged, which will not be described in detail herein.

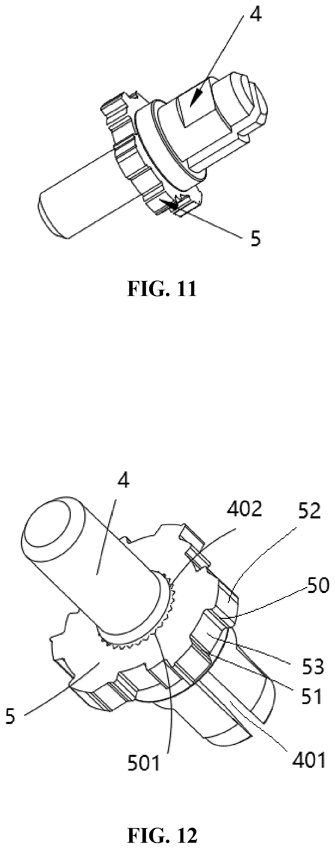

As shown in FIG. 12, the rotation shaft 4 is in interference fit with the cam component 5. Specifically, an internal hole of the cam component 5 is provided with small teeth or a rough surface, and a shaft shoulder 402 of the rotation shaft 4 is in interference fit with the internal hole of the cam component 5.

In the present embodiment, the elastic restoring assembly includes a slide groove plate 2 and a restoring spring 1. The slide groove plate 2 is fixed with respect to the first limiting device in a case that the first limiting face and the second limiting face are fitted with each other, and the slide groove plate 2 is provided with a first slide structure, where the second limiting device 3 is in sliding fit with the first slide structure and is able to move close to or away from the first limiting device 7; and
one end of the restoring spring 1 is connected to the rotation shaft 4 or the cam component 5, and the other end of the restoring spring 1 is fixed with respect to the slide groove plate 2.

In the present embodiment, the slide groove plate 2 is directly connected to one of the seat body and the seat armrest, such that the second limiting device 3 is connected to the above component (the one of the seat body and the seat armrest).

A positioning protrusion 21 is provided on a face of the slide groove plate 2 away from the second limiting device 3, and a positioning groove is provided at a mounting position of the one of the seat body and the seat armrest, to achieve positioning of the slide groove plate 2.

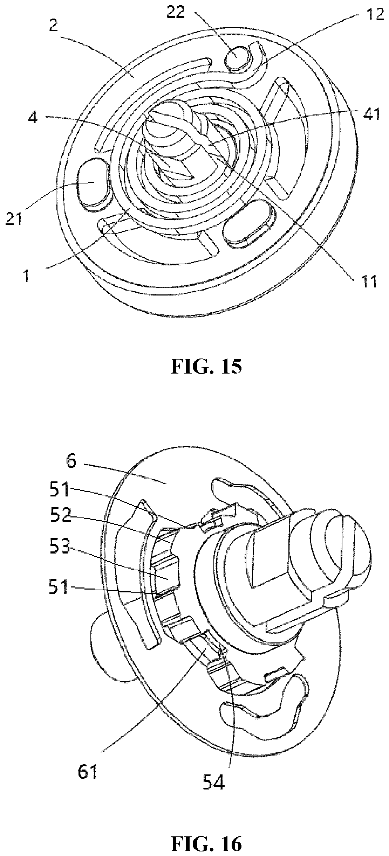

As shown in FIG. 15, preferably, the restoring spring 1 is a spiral spring, where an inner end 11 of the spiral spring is fitted with a positioning opening 41 of the rotation shaft 4 by insertion, and an outer end 12 of the spiral spring is fitted with a spring-hanging boss 22 of the slide groove plate 2.

As shown in FIGS. 3, 16 and 17, preferably, the guide device further includes an unlocking component 6, where the unlocking component 6 is provided with an unlocking face 62 facing the outer surface of the cam component 5, and the second limiting device 3 is located between the unlocking face 62 and the outer surface of the cam component 5; and
the unlocking face 62 has an unlocking pushing face which can push the second guide structure 302 to move towards the avoidance structure 53.

An inner ring of the unlocking component 6 is provided with a clamping claw 61, and the outer surface of the cam component 5 is provided with a clamping claw groove 54. The unlocking component 6 and the cam component 5 are positioned with respect to each other in a circumferential direction through cooperation between the clamping claw 61 and the clamping claw groove 54.

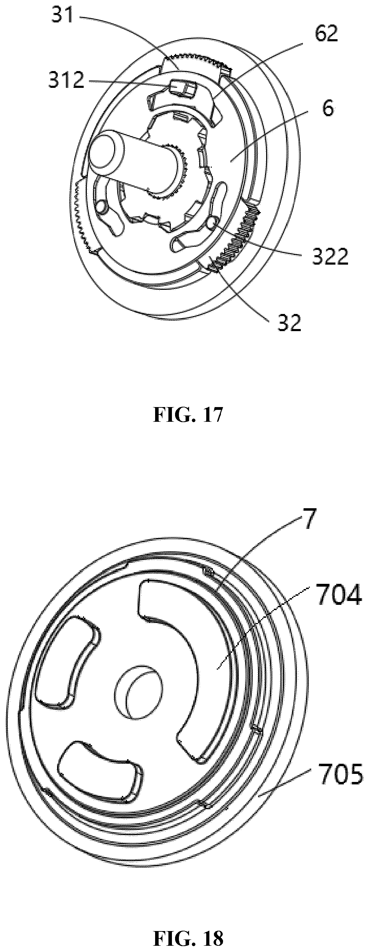

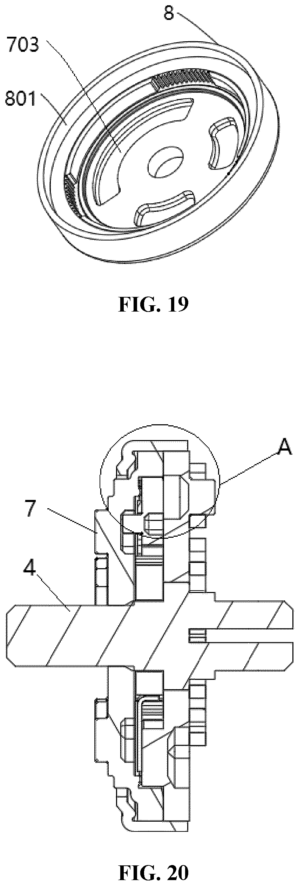

As shown in FIGS. 18 and 19, the first guide structure 703 of the first limiting device 7 is a groove formed by stamping or other means. In this way, a first positioning protrusion 704 is formed on a face of the first limiting device 7 away from the first guide structure 703. In a case that the first limiting device 7 is directly connected to the other one of the seat body and the seat armrest (while the slide groove plate 2 is directly connected to the one of the seat body and the seat armrest), the other one of the seat body and the seat armrest is provided with a corresponding positioning groove, such that the first limiting device 7 can be effectively positioned with respect to the other one of the seat body and the seat armrest.

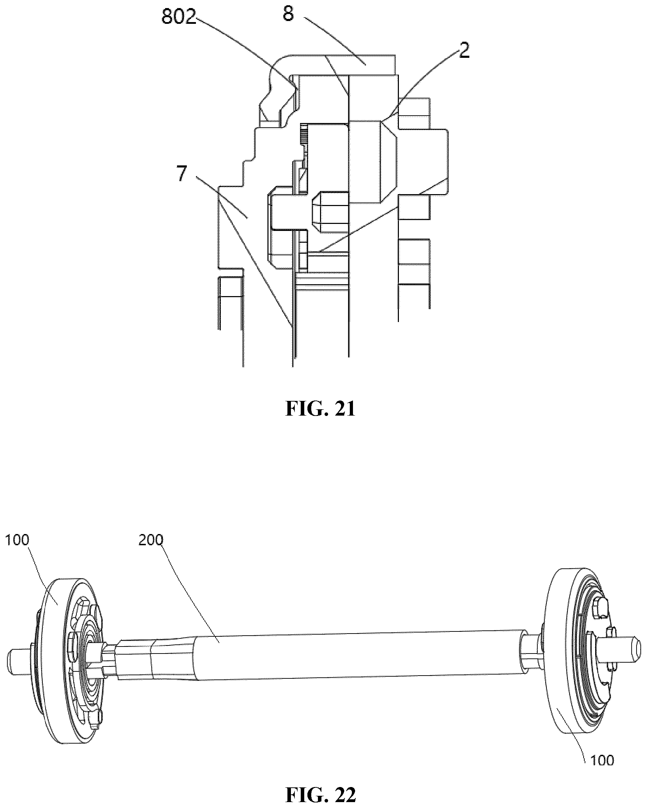

As shown in FIGS. 20 and 21, a sleeve 8 is sleeved outside a first limiting outer ring 705 of the first limiting device 7. A sleeve inner wall 801 of the sleeve 8 faces the first limiting outer ring 705, and there is a gap 802 between the sleeve inner wall 801 and the first limiting outer ring 705. Herein, the first limiting outer ring 705 is the outer surface of the first limiting device 7.

Preferably, the sleeve 8 and the slide groove plate 2 are positioned with respect to each other, to limit movements of the first limiting device 7 and the slide groove plate 2 with respect to each other along an axial direction.

A seat is further provided according to the present application, including a seat body, a seat armrest, and the seat armrest folding and locking mechanism according to any one of the above solutions. Since the seat armrest folding and locking mechanism has the above technical effects, the seat having the above seat armrest folding and locking mechanism also has the same technical effects, which will not be described in detail herein.

To ensure stability, the seat armrest and the seat body are rotationally connected through a connecting shaft. One end of the connecting shaft may be provided with the seat armrest folding and locking mechanism. That is, the seat armrest folding and locking mechanism is arranged at one side of the seat armrest, and the single seat armrest folding and locking mechanism controls relative movement between the seat armrest and the seat body, to implement locking operation on the seat armrest.

The other end of the connecting shaft may not be provided with any other structures, and is only used for rotationally connecting the seat armrest and the body of the seat. Alternatively, the other end of the connecting shaft may be provided with other structures, which will not be described in detail herein.

Of course, both sides of the seat armrest may each be provided with the seat armrest folding and locking mechanism. That is, two ends of the connecting shaft are each provided with the seat armrest folding and locking mechanism.

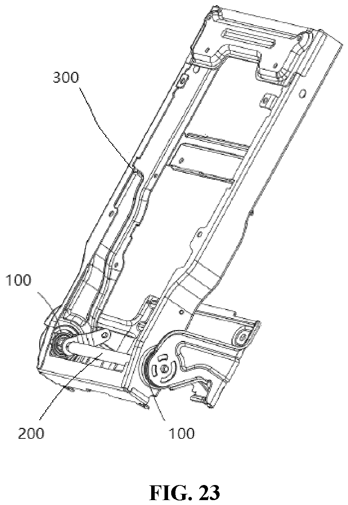

As shown in FIGS. 11, 22 and 23, two seat armrest folding and locking mechanisms 100 are provided, and the two seat armrest folding and locking mechanisms 100 are symmetrically mounted at two ends of the connecting shaft 200 respectively. Each of the two ends of the connecting shaft 200 has a square tube opening being positioned and fitted with the corresponding end of the rotation shaft 4 of the seat armrest folding and locking mechanism 100. Two sides of an armrest frame 300 of the seat armrest are fitted with the two seat armrest folding and locking mechanisms 100 respectively.

Further, two seat armrests are provided, and the two seat armrests are symmetrically arranged at two sides of the seat body respectively.

In a first solution, the two seat armrests are connected to the body of the seat through the seat armrest folding and locking mechanisms respectively. That is, the seat armrest folding and locking mechanisms are applied to both of the two seat armrests at the two sides of the seat.

In a second solution, one of the two seat armrests is connected to the seat body through the seat armrest folding and locking mechanism. The other one of the two seat armrests may be fixedly connected to the seat body, or may be connected to the seat body by other connecting mechanisms.

In a third solution, one seat armrest is provided and is arranged at one side of the seat body, and the seat armrest is connected to the seat body through the seat armrest folding and locking mechanism. That is, only one side of the seat is provided with the seat armrest, and the other side of the seat is not occupied. This implementation is especially applicable to a situation that the seat armrest is mounted inside an automobile, i.e. the seat armrest is provided at an inner side of the seat.

A vehicle is further provided according to the present application, including the seat according to the above solutions. Similarly, the above vehicle has the same technical effects as the above seat, which will not be described in detail herein.

The above embodiments in this specification are described in a progressive manner. Each of the embodiments is mainly focused on describing its differences from other embodiments, and references may be made among these embodiments with respect to the same or similar portions among these embodiments.

According to one aspect a seat armrest folding and locking mechanism, a seat and a vehicle are provided. The seat armrest folding and locking mechanism includes a first limiting device, a second limiting device and a guide device. The first limiting device includes a first limiting face and a first movement face. The second limiting device includes a second limiting face being able to face the first limiting face and the first movement face. One of the first limiting device and the second limiting device is connected to a seat body, and the other is connected to a seat armrest. The guide device guides the second limiting device to be close to or away from the first limiting device. In a case that the second limiting face faces the first limiting face, the guide device guides the second limiting device to get close to the first limiting device, and a positioning fit structure forms between the first limiting face and the second limiting face, such that the first limiting device and the second limiting device are locked with respect to each other. In a case that the second limiting face faces the first movement face, the guide device guides the second limiting device to get away from the first limiting device, and a relatively movable structure forms by the first movement face and the second limiting face, such that the first limiting device and the second limiting device are movable with respect to each other.

## Claims

1. A seat armrest folding and locking mechanism, comprising a first limiting device, a second limiting device and a guide device; wherein
the first limiting device has a first limiting face and a first movement face;
the second limiting device has a second limiting face, wherein the second limiting face is configured to face the first limiting face in one case and face the first movement face in another case; and
the guide device is configured to guide the second limiting device to get close to or away from the first limiting device; and wherein
one of the first limiting device and the second limiting device is connected to a seat body, and the other one of the first limiting device and the second limiting device is connected to a seat armrest;
in the one case that the second limiting face faces the first limiting face, the guide device is configured to guide the second limiting device to get close to the first limiting device, to form a positioning fit structure by the first limiting face and the second limiting face, to make the first limiting device and the second limiting device be locked with respect to each other; and
in the another case that the second limiting face faces the first movement face, the guide device is configured to guide the second limiting device to get away from the first limiting device, to form a relatively movable structure by the first movement face and the second limiting face, to make the first limiting device and the second limiting device be movable with respect to each other.

2. The seat armrest folding and locking mechanism according to claim 1, wherein the first limiting device comprises an annular structure, wherein
the first limiting face and the first movement face are located on an inner wall of the annular structure, and are provided along a circumferential direction of the annular structure; and
the second limiting device is located at an inner side of the annular structure, and the second limiting face faces the inner wall of the annular structure.

3. The seat armrest folding and locking mechanism according to claim 2, wherein
the first limiting device further comprises a guide plate located inside the annular structure, and the guide plate is provided with a first guide structure; and
the second limiting device is provided with a second guide structure in sliding fit with the first guide structure.

4. The seat armrest folding and locking mechanism according to claim 3, wherein
the first guide structure is a groove, and two ends of the groove are each provided with a limiting face; and
the second guide structure is a boss, and the limiting face is configured to be in contact with the second guide structure to limit the second guide structure.

5. The seat armrest folding and locking mechanism according to claim 2, wherein the number of the second limiting devices is plural, and the plurality of second limiting devices are provided along the circumferential direction of the annular structure.

6. The seat armrest folding and locking mechanism according to any one of claims 1 to 5, wherein
in the one case that the second limiting face faces the first limiting face, the guide device is configured to drive the second limiting device to get close to the first limiting device, to make the first limiting face and the second limiting face be fitted with each other in a protrusion-recess manner; and
in the another case that the second limiting face faces the first movement face, the guide device is configured to drive the second limiting device to get away from the first limiting device, to make the second limiting face be in sliding fit with the first movement face.

7. The seat armrest folding and locking mechanism according to claim 6, wherein
the first limiting face and the second limiting face are both provided with engagement teeth for mutual engagement; and the first movement face is a plain face.

8. The seat armrest folding and locking mechanism according to claim 3, wherein the guide device comprises a cam component, a rotation shaft and an elastic restoring assembly, wherein
an outer surface of the cam component has a cam pushing face, a guide pushing face and an avoidance structure which are allowed to be in contact with the second guide structure of the second limiting device; wherein
in a case that the second guide structure moves in a direction along which the first limiting face and the first movement face are arranged, the second guide structure is configured to push the cam pushing face to rotate the cam component;
the guide pushing face is configured to push the second guide structure to be close to the first limiting device; and
the avoidance structure, when being in contact with the second guide structure, is configured to make the second guide structure be away from the first limiting device;
the rotation shaft is coaxially connected to the cam component; and
the elastic restoring assembly is connected to the rotation shaft, and is configured for restoring the cam component and the first limiting device.

9. The seat armrest folding and locking mechanism according to claim 8, wherein the elastic restoring assembly comprises a slide groove plate and a restoring spring, wherein
in a case that the first limiting face and the second limiting face are fitted with each other, the slide groove plate is fixed with respect to the first limiting device;
the slide groove plate is provided with a first slide structure, and the second limiting device is in sliding fit with the first slide structure and is movable to be close to or away from the first limiting device; and
one end of the restoring spring is connected to the rotation shaft or the cam component, and the other end of the restoring spring is fixed with respect to the slide groove plate.

10. The seat armrest folding and locking mechanism according to claim 8 or claim 9, wherein the guide device further comprises an unlocking component, wherein
the unlocking component has an unlocking face facing the outer surface of the cam component, and the second limiting device is located between the unlocking face and the outer surface of the cam component; and
the unlocking face has an unlocking pushing face configured to push the second guide structure to move towards the avoidance structure.

11. A seat, comprising a seat body and a seat armrest, and further comprising the seat armrest folding and locking mechanism according to any one of claims 1 to 10.

12. The seat according to claim 11, wherein the seat armrest and the seat body are rotationally connected through a connecting shaft, wherein
one end of the connecting shaft is provided with the seat armrest folding and locking mechanism; or
two ends of the connecting shaft are each provided with the seat armrest folding and locking mechanism.

13. A vehicle, comprising the seat according to claim 11 or claim 12.
